# EUROPÄISCHE PATENTSCHRIFT

(11) **EP 4 422 882 B1**
(45) Veröffentlichungstag und Bekanntmachung des Hinweises auf die Patenterteilung: **08.04.2026**
(21) Anmeldenummer: 22793746.3
(22) Anmeldetag: 28.09.2022
(51) Int. Cl.: B60B 7/06, B60B 7/14, B60B 7/20, B60B 7/00, B60B 7/02

(54) **ANORDNUNG EINER NICHT ROTIERENDEN RADBLENDE AN EINEM ACHSSCHENKEL**
ASSEMBLY OF A NON-ROTATING HUB CAP ON AN AXLE LIMB
ASSEMBLAGE D'UN ENJOLIVEUR NON ROTATIF SUR UNE BRANCHE D'ESSIEU

(30) Priorität: 28.10.2021 DE 102021212165
(43) Veröffentlichungstag der Anmeldung: 04.09.2024
(73) Patentinhaber: ZF Friedrichshafen AG, 88046 Friedrichshafen (DE)
(72) Erfinder: WAGNER, Hubert, 84385 Egglham (DE); FISCHBÖCK, Christian, 94104 Witzmannsberg (DE); GASTINGER, Margit, 94065 Waldkirchen (DE); WIMMER, Johann, 94127 Neuburg A. Inn (DE); GELL, Klaus, 94130 Obernzell (DE)
(74) Vertreter: ZF Friedrichshafen AG
(86) Internationale Anmeldenummer: PCT/EP2022/076932
(87) Internationale Veröffentlichungsnummer: WO 2023/072516

(56) Entgegenhaltungen:
- DE-A1- 3 231 364
- US-A- 1 522 904
- US-A- 2 741 047
- US-A- 3 795 997
- US-A- 4 981 329

## Beschreibung

Die Erfindung betrifft die Anordnung einer nicht rotierenden Radblende an einem Achsschenkel eines Kraftfahrzeugs.

Die US 4,981,329 lehrt eine stationäre Radabdeckungsbaugruppe für ein Kraftfahrzeug. Die Radabdeckungsbaugruppe besteht aus einem Montageflansch, der an dem Gewindeende einer Spindel in dem Kraftfahrzeug befestigt ist. Eine Abdeckplatte, auf deren Außenfläche Zeichen angebracht sind, ist an dem Montageflansch befestigt, sodass die Abdeckplatte stationär ist, wenn sich eine Radfelge mit einem Reifen dreht, der mit einer Nabe auf der Achse verbunden ist, sodass die Zeichen auf der Abdeckplatte zu sehen sind. Eine ringförmige Lagerdichtung kann an der Radfelge befestigt werden, so dass sich die Lagerdichtung mit der Radfelge drehen kann. Ferner kann eine kegelstumpfförmige Staubschutzabdeckung mit einem ringförmigen, nach innen gerichteten flachen Rand um dessen kleinere Kante vorgesehen werden. Der Rand kann an der Rückseite des stationären Montageflansches befestigt werden. Die Staubabdeckung erstreckt sich über den breiteren Rand, so dass sie sich in die Lagerdichtung einfügt und so verhindert, dass Staub und Schmutz dazwischen eindringen.

Aus dem Dokument US 2 741 047 A ist eine Werbevorrichtungen bekannt, insbesondere Schilder, die auf Lieferfahrzeugen oder anderen Kraftfahrzeugen mitgeführt und ausgestellt werden sollen. Dabei wird ein Plattenlagerwerbemittel bereitgestellt, das an einer der Vorderradspindeln eines Kraftfahrzeugs so angebracht werden kann, dass es als Teil der Radbaugruppe erscheint, aber während der Drehung des Rades stationär bleibt.

Aus dem Dokument US 1 522 904 A ist ebenfalls eine Werbevorrichtung in Form einer Platte zur Befestigung für Fahrzeugräder bekannt. Hier wird eine Kombination aus einem sich drehenden Rad, einer fixierten Spindel für dieses Rad und einer innen und außen mit Gewinde versehene Hülse, welche auf er Spindel verschraubt ist offenbart, wobei die Werbeplatte auf der Hülse angebracht ist und Befestigungsmittel auf die Hülse verschraubt sind, die die Werbeplatte stationär halten.

Das Dokument US 3 795 997 A zeigt eine Radverkleidungsanordnung mit einem scheibenförmigen Verkleidungsteil, welche an einem Rad angebracht ist, das auf einer festen Achse drehbar gelagert ist, wobei durch eine auf das Ende der Achse aufgeschraubte Mutter, durch eine Platte mit einem zylinderförmigen, auf der Innenseite hervorspringenden Teil, welcher zur Verhinderung einer Drehung auf der Mutter befestigt ist, durch ein mit ihrem äußeren Ende am Fahrzeugrad befestigte und den zylindrischen Teil umgebende Muffe, durch eine Dichtung zwischen der Muffe und dem zylindrischen Teil, durch eine am Verkleidungsteil angebrachte Einrichtung für die Befestigung an der Platte mit einem nach unten ragenden über die Oberkante der Platte fassenden Element und einem durch eine Feder vorgespannten und mit der Unterkante der Platte verbindbaren Riegel für die drehfreie Befestigung des Verkleidungsteils an der Platte.

Aus der DE 32 31 364 A1 ist eine Belüftungsvorrichtung für die Bremse in einem Kraftfahrzeugrad offenbart, bei der zur Bildung eines von der Radinnenseite bis zur Radaußenseite führenden Luftströmkanals in einer Felgenschüssel Innenöffnungen und in einer Radkappe Außenöffnungen vorgesehen sind, wobei die Radkappe auf einer feststehenden Radachse gehalten ist und zwei miteinander verbundene Segmente umfasst, die zwischen sich mindestens einen Luftströmkanal mit einer schlitzförmigen Außenöffnung bilden, welche in einer vertikalen Ebene quer zur Anströmrichtung ausgerichtet ist.

Eine Aufgabe der vorliegenden Erfindung kann darin gesehen werden eine insbesondere einfachere und kostengünstigere Anordnung einer nicht rotierenden Radblende an einem Achsschenkel für ein Kraftfahrzeug bereitzustellen. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß der vorliegenden Erfindung wird ein Distanzstück vorgeschlagen, das nicht rotierend, d.h. stillstehend, an einem Zapfen eines Achsschenkels befestigt ist. An dem Distanzstück wiederum ist eine nicht rotierende Radblende angebracht. In diesem Sinne wird eine Anordnung einer nicht rotierenden Radblende an einem Achsschenkel für ein Kraftfahrzeug bereitgestellt. Die Anordnung umfasst einen Achsschenkel, ein Distanzstück, eine Radnabe, ein Radlager, ein Rad und eine nicht rotierende Radblende.

Der Achsschenkel umfasst einen nicht rotierenden Zapfen. Der Zapfen erstreckt sich insbesondere in einer horizontalen Richtung des Kraftfahrzeugs, wenn der Achsschenkel in das Kraftfahrzeug eingebaut ist. Der Zapfen kann hohl ausgeführt sein. Der Zapfen dient der rotierenden Lagerung der Radnabe, an welcher wiederum das Rad drehfest befestigt wird. So weist der Zapfen eine äußere Umfangsfläche auf, auf welcher die Radnabe mittels des Radlagers drehbar gelagert ist. Dies kann insbesondere mittels eines Wälzlagers erfolgen, das zwischen der äußeren Umfangsfläche des Zapfens und einer inneren Umfangsfläche der Radnabe angeordnet sein kann. Die Radnabe dient dazu, das Rad drehfest aufzunehmen. Dazu weist die Radnabe eine äußere Stirnseite auf, an welcher das Rad drehfest befestigt ist.

Damit der Effekt einer stillstehenden Radblende auftreten kann, ist die Radblende unmittelbar an dem nicht rotierenden und damit stillstehenden Achsschenkel drehfest befestigt. Dadurch, dass die Radblende drehfest an dem nicht rotierenden bzw. stillstehenden Achsschenkel befestigt ist, rotiert die Radblende nicht, wenn das Kraftfahrzeug fährt, wobei sich das Rad und die Radnabe drehen. Die Radblende verdeckt dabei zumindest einen Teil einer Außenseite des Rades. Beispielsweise kann die Radblende mittels mehrerer um den Umfang der äußeren Stirnseite des Zapfens verteilter Schraubverbindungen drehfest an dem Zapfen befestigt werden.

Die Radnabe weist eine zentrale Radnaben-Öffnung auf. Die Radnabenöffnung erstreckt sich insbesondere in einer axialen Richtung der Radnabe durch die Radnabe. Die Radnaben-Öffnung dient zum einen insbesondere dazu, den Zapfen des Achsschenkels durch die Radnabe zu führen, sodass die Radnabe drehbar auf dem Zapfen gelagert werden kann. Andererseits dient die zentrale Öffnung der Radnabe insbesondere dazu, dass das Distanzstück, dass insbesondere an einer äußeren Stirnseite des Zapfens anliegt und dort auch befestigt sein kann, eine Verbindung mit der Radblende herstellen kann, die seitlich neben dem Rad und somit außerhalb der Radnabe und derer zentraler Öffnung angeordnet ist. Mit anderen Worten bildet das Distanzstück eine axiale Verlängerung des Zapfens nach außen hin. Das Distanzstück erstreckt sich weiter nach außen als die äußere Stirnseite des Zapfens, sodass die Radblende an dem Distanzstück befestigt werden kann. Das Distanzstück überbrückt somit einen Abstand zwischen einem Anschlusssystem der Radblende und dem Zapfen. In diesem Sinne ist das Distanzstück durch die zentrale Radnaben-Öffnung der Radnabe geführt, wobei die zentrale Radnaben-Öffnung zu dem Radlager führt. Unter "außen" und der "Außenseite" ist insbesondere diejenige Seite zu verstehen, die nach außen und nicht nach innen gerichtet ist, wenn das jeweilige Element, z.B. das Rad oder die Radnabe, an dem Kraftfahrzeug befestigt ist.

Erfindungsgemäß ist vorgesehen, dass eine Verschraubung des Radlagers bzw. eine axiale Fixierung/Verspannung des Radlagers mit einer Befestigung, insbesondere einer Verschraubung, des Distanzstücks kombiniert wird. Das Distanzstück liegt dabei an dem Radlager an, wenn das Distanzstück beispielsweise mittels der Verschraubung an dem Zapfen des Achsschenkels befestigt ist, sodass das Radlager in der axialen Richtung gegen ein Verschieben gesichert ist. Das Distanzstück gemäß dieser Ausführungsform ermöglicht einen direkten axialen Presskontakt mit dem Radlager, wobei gleichzeitig durch die drehfeste Verbindung mit der Radblende die Letztere als stehende Radblende ausgeführt sein kann. In diesem Sinne bildet das Distanzstück ein Fixierelement. Das Fixierelement erstreckt sich in der axialen Richtung und liegt an dem Radlager an, wobei das Distanzstück an dem Zapfen des Achsschenkels befestigt ist, sodass das Fixierelement des Distanzstücks das Radlager in der axialen Richtung fixiert.

Das Distanzstück erstreckt sich gemäß einer Ausführungsform berührungsfrei bis zu einer Radnabe und verschließt eine Öffnung der Radnabe zu einer Lagerstelle reibungsfrei, an welcher die Radnabe auf dem Zapfen des Achsschenkels drehbar gelagert ist. Im Vergleich zum Stand der Technik kann somit auf eine ringförmige Lagerdichtung und eine Staubschutzabdeckung verzichtet werden. Weiterhin muss das Distanzstück gemäß der vorliegenden Erfindung lediglich bis zur Radnabe geführt werden und nicht gemäß dem Stand der Technik bis zur Radfelge, wodurch das Distanzstück kompakter ausgeführt sein kann als die Kombination aus Lagerdichtung und Staubschutzabdeckung gemäß dem Stand der Technik. Es wird somit vorgeschlagen, das Distanzstück direkt zur Radnabe zu führen. Insbesondere kann das Distanzstück einen Führungsring formen, der einteilig mit dem Distanzstück verbunden ist. Auf diese Weise kann die Radnabe nach außen verschlossen werden. Dadurch, dass das Distanzstück bis zur Radnabe reicht, kann auf zusätzliche Bauteile wie einen Führungsring an der Radnabe und einen zwischen dem Führungsring und dem Distanzstück angeordneten Dichtring verzichtet werden. Diese Ausführungsform zeichnet sich insbesondere dadurch aus, dass sie weniger Bauteile und einen geringeren Montageaufwand erfordert und kostengünstiger umgesetzt werden kann. In diesem Sinne ist gemäß einer Ausführungsform vorgesehen, dass das Distanzstück die zentrale Öffnung der Radnabe nach außen verschließt, ohne in Kontakt mit der Radnabe zu kommen. Insbesondere besteht in radialer Richtung stets ein Spalt zwischen dem Distanzstück und der Radnabe. Der Spalt verhindert, dass das Distanzstück an der rotierenden Radnabe reibt. Der Spalt ist jedoch derart klein und/oder weist eine derartige Geometrie auf, dass ein Eintritt von Fremdkörpern (z.B. Staub, Schmutz oder andere feste oder flüssige Fremdkörper) durch die zentrale Öffnung der Radnabe in Richtung der Lagerung der Radnabe auf dem Zapfen des Achsschenkels minimiert wird.

Um den Eintritt von Fremdkörpern in den Bereich der Radnabenlagerung besonders sicher zu verhindern, ohne dass eine direkte Berührung zwischen Radnabe und Distanzstück erfolgt, kann der radiale Spalt zwischen der Radnabe und dem Distanzstück labyrinthförmig in der axialen Richtung entlang einer inneren Oberfläche der Radnabe und einer äußeren Oberfläche des Distanzstücks geführt sein. In diesem Sinne ist gemäß einer Ausführungsform vorgesehen, dass dort, wo das Distanzstück die zentrale Öffnung der Radnabe nach außen verschließt, einander zugewandte Abschnitte des Distanzstücks und der Radnabe einen labyrinthförmigen Spalt zwischen sich bilden.

Das Labyrinth kann beispielsweise durch sich radial überlappendende und axial voneinander beabstandete Labyrinth-Elemente der Radnabe und des Distanzstücks gebildet werden. Eine derartige Konstruktion zeichnet sich insbesondere durch ihre Effektivität und Einfachheit aus. In diesem Sinne ist gemäß einer weiteren Ausführungsform vorgesehen, dass die Radnabe wenigstens ein Radnaben-Labyrinth-Element bildet, welches in einer radialen Richtung nach innen gerichtet ist, und dass das Distanzstück wenigstens ein Distanzstück-Labyrinth-Element bildet, welches in der radialen Richtung nach außen gerichtet ist. Das Radnaben-Labyrinth-Element ist dabei in einer axialer Richtung neben dem Distanzstück-Labyrinth-Element angeordnet, ohne das Distanzstück-Labyrinth-Element zu berühren, wobei das Radnaben-Labyrinth-Element das Distanzstück-Labyrinth-Element in der radialen Richtung überlappt. Die radiale Richtung und die axiale Richtung sind dabei insbesondere auf das Distanzstück und/oder die Radnabe bezogen.

Zusätzlich kann ein Labyrinth-Dichtring zur Radnabe positioniert sein. Der Labyrinth-Dichtring leistet einen weiteren Beitrag, bestehende radiale Spalte zwischen der Radnabe und dem Distanzstück in Richtung des Radlagers zu verschließen, sodass keine Verschmutzungen in den Bereich der Radnabenlagerung gelangen können. In diesem Sinne ist gemäß einer Ausführungsform vorgesehen, dass die Anordnung weiterhin einen Labyrinth-Dichtring umfasst, wobei der Dichtring an einer Innenseite der Radnaben-Öffnung angeordnet ist und sich zwischen der Radnabe und dem Distanzstück erstreckt. Insbesondere ist der Labyrinth-Dichtring in der axialen Richtung unmittelbar neben dem labyrinthförmigen Spalt angeordnet. Bei dem Labyrinth-Dichtring handelt es sich insbesondere um einen Wellendichtring.

In einer Ausführungsform ist das Distanzstück koaxial an einem stirnseitigen Rand des Zapfens des Achsschenkels befestigt, z.B. mittels mehrerer über den Rand verteilter Schrauben, die parallel zu einer Längsachse des Zapfens verlaufen können. Diese Ausführungsform ermöglicht, dass auf zentrale Durchgangsbohrungen innerhalb des Distanzstücks und innerhalb des Achsschenkels verzichtet werden kann. Weiterhin verhindern die mehreren Schrauben ein Verdrehen des Distanzstücks. Das Distanzstück kann in seiner Mitte geschlossen ausgeführt sein. Der Achsschenkel muss keine Öffnung für beispielsweise eine Schraube zur Verbindung des Distanzstücks mit dem Achsschenkel aufweisen. Dadurch kann eine erhöhte Dichtheit zu einem Bereich erreicht werden, in welchem insbesondere eine Radlagerverschraubung vorgesehen sein kann.

Das Distanzstück kann mittels mehrerer Schrauben an dem Zapfen des Achsschenkels befestigt sein. Besonders vorteilhaft können Bohrungen für Schrauben zur Verbindung des Distanzstücks mit der Radblende einerseits und dem Zapfen des Achsschenkels andererseits in einem gemeinsamen Ringabschnitt angeordnet sein. Dies vereinfacht die Herstellung weiter und leistet einen weiteren Beitrag zur kompakten Bauweise. In diesem Sinne bildet das Distanzstück in einer Ausführungsform einen Ringabschnitt, der um eine Längsachse des Distanzstücks herum verläuft, wobei mehrere Radblenden-Bohrungen zur Verbindung des Distanzstücks mit der Radblende in dem Ringabschnitt angeordnet sind, und wobei in dem Ringabschnitt zwischen den Radblenden-Bohrungen mehrere Achsschenkel-Bohrungen zur Verbindung des Distanzstücks mit dem Zapfen des Achsschenkels angeordnet sind.

Alternativ besteht die Möglichkeit, das Distanzstück mit dem Zapfen des Achsschenkels mittels einer Zentralmutter zu verschrauben, insbesondere kombiniert mit einer weiter unten beschriebenen axialen Verspannung eines Radlagers zwischen dem Zapfen und der Radnabe. In diesem Sinne ist gemäß einer weiteren Ausführungsform vorgesehen, dass ein distales Ende des Zapfens durch eine zentrale Öffnung des Distanzstücks geführt ist, wobei das Distanzstück mittels einer Zentralmutter drehfest an dem distalen Ende des Zapfens befestigt ist. Das Distanzstück kann dabei über einen separaten Bund zum Achsschenkel gegen Verdrehen fixiert sein. In diesem Sinne kann das Distanzstück einen ersten Drehfixierbund aufweisen, wobei der Zapfen des Achsschenkels einen zweiten Drehfixierbund aufweist, und wobei der erste Drehfixierbund derart formschlüssig an dem zweiten Drehfixierbund anliegt, dass das Distanzstück gegen Drehen gesichert ist. Alternativ können andere Drehfixierungen zum Einsatz kommen, z.B. Passstifte oder Passschrauben.

Das Radlager kann zwischen der äußeren Umfangsfläche des Zapfens und einer inneren Umfangsfläche der Radnabe angeordnet sein, sodass die Radnabe mittels des Radlagers drehbar auf dem Zapfen gelagert ist. Weiterhin kann das Radlager mittels einer Kombination aus zwei Nutmuttern und einem zwischen den beiden Nutmuttern angeordneten Sicherungsblech in der axialen Richtung auf dem Zapfen des Achsschenkels gesichert sein.

Eine noch höhere Dichtigkeit des Radlagers zur äußeren Umgebung kann erzielt werden, indem der weiter oben beschriebene Labyrinth-Dichtring mit einem Radlager-Dichtring kombiniert wird, der sich direkt am Radlager befindet. In diesem Sinne umfasst die Anordnung in einer weiteren Ausführungsform einen Radlager-Dichtring, der an der Innenseite der Radnaben-Öffnung angeordnet ist und sich zwischen der Radnabe und dem Radlager erstreckt, wobei der Radlager-Dichtring in der axialen Richtung unmittelbar an dem Radlager angeordnet ist. Insbesondere ist der Radlager-Dichtring auf derjenigen axialen Seite des Radlagers angeordnet, welche dem Distanzstück zugewandt ist. Bei dem Radlager-Dichtring handelt es sich insbesondere um einen Wellendichtring. Alternativ kann auch lediglich die Radlager-Dichtung vorgesehen werden, wohingegen auf die Labyrinth-Dichtung verzichtet wird. Durch das Labyrinth kann bereits ein Großteil von Fremdkörpern abgehalten werden. Sollten trotzdem Fremdkörper über das Labyrinth in Richtung des Radlagers gelangen, können diese von der Radlager-Dichtung abgefangen werden.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine perspektivische Ansicht einer ersten Anordnung zur Befestigung einer nicht rotierenden Radblende an einem Achsschenkel für ein Kraftfahrzeug, wobei ein Distanzstück der Anordnung zentral an einem Zapfen des Achsschenkels befestigt ist,
- Fig. 2: eine Längsschnittdarstellung durch die Anordnung nach Fig. 1,
- Fig. 2a: einen vergrößerten Teil der Anordnung nach Fig. 2 im Bereich einer Labyrinthführung im Bereich des Distanzstücks und einer Radnabe der Anordnung,
- Fig. 3: eine perspektivische Ansicht des Distanzstücks der Anordnung nach Fig. 1 ,
- Fig. 4: eine perspektivische Ansicht einer zweiten Anordnung zur Befestigung einer nicht rotierenden Radblende an einem Achsschenkel für ein Kraftfahrzeug, wobei ein Distanzstück koaxial an einem Zapfen des Achsschenkels befestigt ist,
- Fig. 5: eine Längsschnittdarstellung durch die Anordnung nach Fig. 4,
- Fig. 6: eine perspektivische Explosionsdarstellung einer dritten Anordnung zur Befestigung einer nicht rotierenden Radblende an einem Achsschenkel für ein Kraftfahrzeug, wobei ein Distanzstück ein Radlager in einer axialen Richtung fixiert bzw. verspannt und wobei jeweils eine Dichtung im Bereich des Distanzstücks und im Bereich des Radlagers angeordnet sind,
- Fig. 7: eine Längsschnittdarstellung durch einen Teil der Anordnung nach Fig. 6,
- Fig. 8: eine perspektivische Ansicht des Distanzstücks der Anordnung nach Fig. 6,
- Fig. 9: eine perspektivische Ansicht einer vierten Anordnung zur Befestigung einer nicht rotierenden Radblende an einem Achsschenkel für ein Kraftfahrzeug, wobei ein Distanzstück ein Radlager in einer axialen Richtung fixiert bzw. verspannt und wobei eine Dichtung im Bereich des Radlagers angeordnet ist, wohingegen im Bereich des Distanzstücks keine zusätzliche Dichtung angeordnet ist,
- Fig. 10: eine Längsschnittdarstellung durch die Anordnung nach Fig. 9,
- Fig. 11: eine weitere Längsschnittdarstellung der Anordnung nach Fig. 9, wobei eine Radblende an dem Distanzstück befestigt ist und wobei ein Rad an einer Radnabe der Anordnung befestigt ist,
- Fig. 12: eine perspektivische Ansicht der Anordnung nach Fig. 11,
- Fig. 13: eine perspektivische Ansicht der Anordnung nach Fig. 11 mit einer alternativen, kleineren Radblende,
- Fig. 14: eine perspektivische Längsschnittdarstellung einer fünften Anordnung zur Befestigung einer nicht rotierenden Radblende an einem Achsschenkel für ein Kraftfahrzeug, wobei ein Distanzstück mittels einer Zentralmutter an dem Achsschenkel befestigt ist und wobei das Distanzstück ein Radlager in einer axialen Richtung fixiert bzw. verspannt,
- Fig. 15: eine perspektivische Explosionsdarstellung von Teilen der Anordnung nach Fig. 14,
- Fig. 16: eine vergrößerte Darstellung insbesondere des Distanzstücks der Anordnung nach Fig. 14, wobei das Distanzstück einen ersten Drehfixierbund aufweist, und
- Fig. 17: einen vergrößerte Darstellung insbesondere eines Zapfens des Achsschenkels nach Fig. 14, wobei der Zapfen einen zweiten Drehfixierbund aufweist.

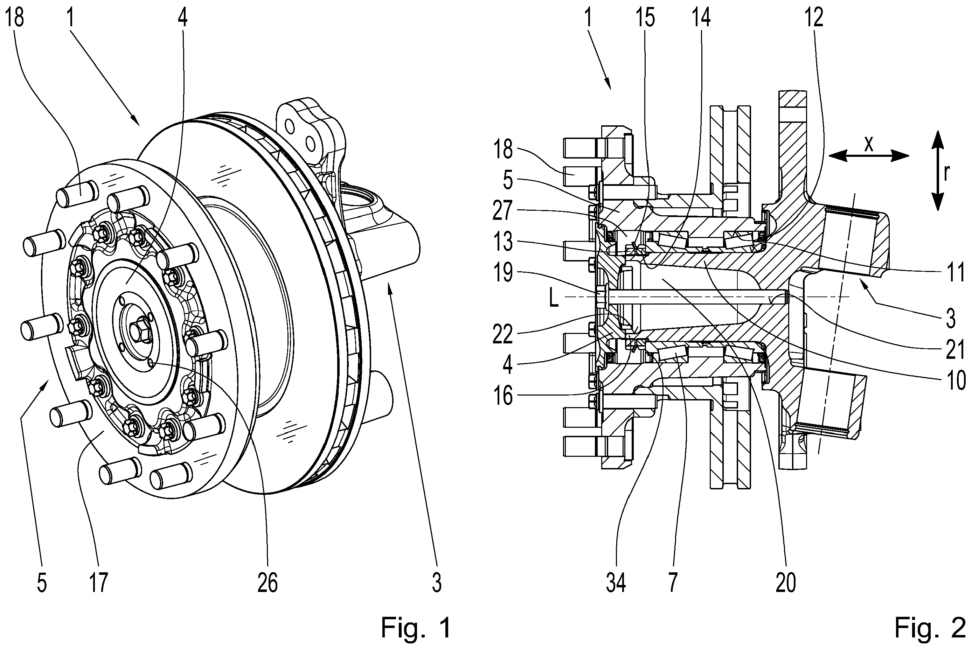

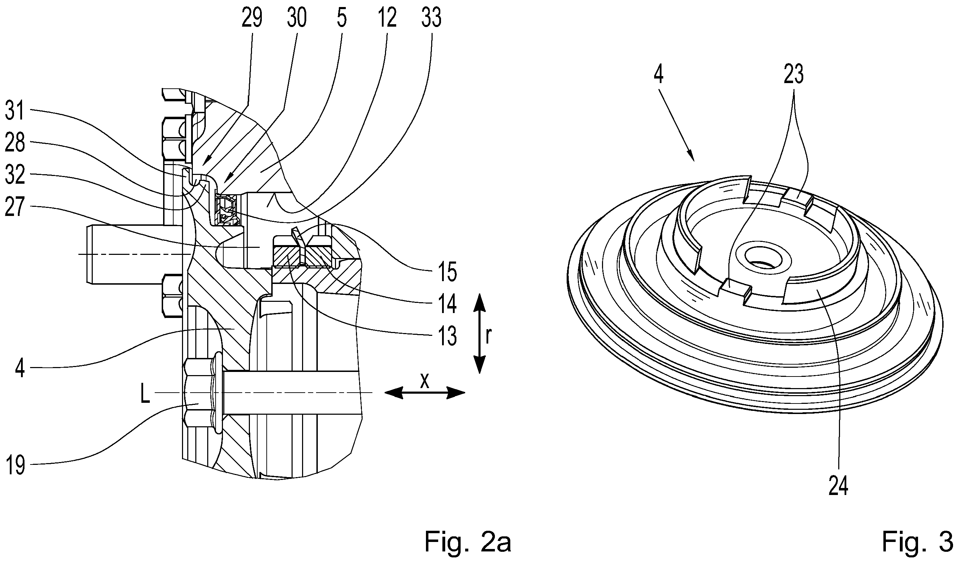

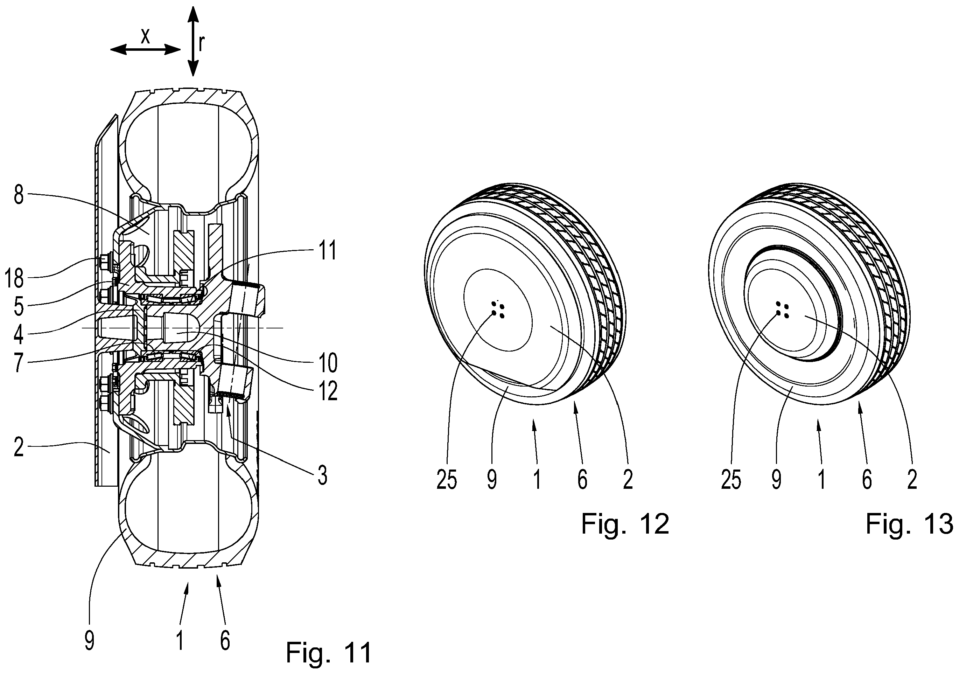

Fig. 1 bis 3 zeigen eine Anordnung 1 zur Befestigung einer nicht rotierenden Radblende 2 an einem Achsschenkel 3 für ein nicht dargestelltes Kraftfahrzeug. In Fig. 1 bis 3 ist die Radblende 2 selbst nicht dargestellt. Die Befestigung der nicht rotierenden Radblende 2 kann jedoch ähnlich ausgeführt sein, wie dies durch das Ausführungsbeispiel nach Fig. 11 dargestellt ist. Die Anordnung 1 umfasst insbesondere ein Distanzstück 4, eine Radnabe 5, ein Rad 6 sowie ein Radlager 7 in Form eines Wälzlagers. In Fig. 1 und 2 ist das Rad 6 selbst nicht dargestellt. Die Befestigung des Rades 6 an der Radnabe 5 kann jedoch ähnlich ausgeführt sein, wie dies durch das Ausführungsbeispiel nach Fig. 11 dargestellt ist, wobei eine Felge 8 des Rades 6 mit der Radnabe 5 verschraubt ist, und wobei ein Reifen 9 auf die Felge 8 gezogen ist.

Der Achsschenkel 3 umfasst einen nicht rotierenden Zapfen 10, der eine äußere Umfangsfläche 11 aufweist, auf welcher die Radnabe 5 mittels des Radlagers 7 drehbar gelagert ist. Das Radlager 7 ist dabei zwischen der äußeren Umfangsfläche 11 des Zapfens 10 und einer inneren Umfangsfläche 12 der Radnabe 5 angeordnet. In dem durch Fig. 1 und 2 gezeigten Ausführungsbeispiel ist das Radlager 7 mittels einer Kombination aus zwei Nutmuttern 13, 14 und einem zwischen den beiden Nutmuttern 13, 14 angeordneten Sicherungsblech 15 in einer axialen Richtung x auf dem Zapfen 10 des Achsschenkels 3 gesichert. Die Nutmuttern 13, 14 können dabei auf ein distales Ende 16 des Zapfens 10 geschraubt sein, sodass das Radlager 7 in der axialen Richtung x verspannt und gesichert wird.

Die Radnabe 5 weist eine äußere Stirnseite 17 auf, an welcher das Rad 6 (vgl. Fig. 11) mittels mehrerer um den äußeren Rand der Radnabe 5 verteilter Schrauben 18 drehfest befestigt werden kann. Das Distanzstück 4 ist derart an dem Achsschenkel 3 befestigt, dass das Distanzstück 4 nicht rotiert, wenn die Radnabe 5 rotiert. In dem durch Fig. 1 und 2 gezeigten Ausführungsbeispiel ist das Distanzstück 4 über eine zentrale Bundschraube 19 mit dem Achsschenkel 3 verschraubt. Der Achsschenkel 3 umfasst einen Hohlraum 20 im Bereich des Zapfens 10 sowie eine zu der Bundschraube 19 passende zentrale Durchgangsbohrung 21, die sich an den Hohlraum 20 auf der dem Distanzstück 4 abgewandten Seite anschließt. Das Distanzstück 4 weist eine zu der Bundschraube 19 passende zentrale Befestigungsbohrung 22 auf. Die Bundschraube 19 ist durch die Durchgangsbohrung 22 des Distanzstücks gesteckt und erstreckt sich durch den Hohlraum 20 im Bereich des Zapfens 10. Ein frei auslaufendes Ende der Bundschraube 19 weist ein Außengewinde auf, das in ein dazu passendes Innengewinde im Bereich der Durchgangsbohrung 21 des Achsschenkels 3 eingreift, sodass das Distanzstück 4 mit dem Achsschenkel 3 verschraubt ist.

Fig. 3 zeigt, dass das Distanzstück 4 zwei Fixierbünde 23 aufweist, die im eingebauten Zustand formschlüssig in zwei korrespondierende Fixierbünde des Zapfens 10 eingreifen, sodass das Distanzstück 4 drehfest bzw. stellungsgebunden an dem Achsschenkel 3 befestigt ist. Das Distanzstück 4 weist weiterhin einen Zentrierdurchmesser 24 auf, der im eingebauten Zustand formschlüssig in ein korrespondierendes Gegenstück am Zapfen 10 eingreift, sodass das Distanzstück 4 zentriert zu dem Zapfen 10 des Achsschenkels 3 ausgerichtet ist.

Die Radblende 2 (vgl. Fig.11, 12 und 13) kann mittels mehrerer um den Umfang des Distanzstücks 4 verteilter Schrauben 25 unmittelbar und drehfest an dem Distanzstück 4 befestigt werden. Das Distanzstück 4 weist dazu in dem gezeigten Ausführungsbeispiel vier koaxiale um den Umfang verteilte Bohrungen 26 auf. Der Achsschenkel 3 und sein Zapfen 10 rotieren nicht, wenn sich die Radnabe 5 zusammen mit dem Rad 6 über das Radlager 7 auf dem Zapfen 10 dreht. Damit der Effekt einer stillstehenden Radblende auftreten kann, ist die Radblende 2 wie vorstehend beschrieben an dem nicht rotierenden und damit stillstehenden Achsschenkel 3 drehfest befestigt. Dadurch, dass die Radblende 2 drehfest an dem nicht rotierenden bzw. stillstehenden Achsschenkel 3 befestigt ist, steht die Radblende 2, wenn das Kraftfahrzeug fährt, wobei sich das Rad 6 und die Radnabe 5 drehen. Die Radblende verdeckt dabei, wie durch Fig. 12 und 13 gezeigt, zumindest einen Teil einer Außenseite des Rades 6.

Die innere Umfangsfläche 12 der Radnabe 5 begrenzt eine zentrale Radnaben-Öffnung 27, die sich einerseits bis zu der äußeren Stirnseite 17 der Radnabe 5 erstreckt und andererseits zu dem Radlager 7 führt. Das Distanzstück 4 verschließt dabei die zentrale Öffnung 27 der Radnabe 5 nach außen, ohne in Kontakt mit der Radnabe 5 zu kommen. Wie besonders gut aus der Vergrößerung nach Fig. 2a ersichtlich, verschließt das Distanzstück 4 die zentrale Öffnung 27 der Radnabe 5 dabei nach außen derart, dass einander zugewandte Abschnitte des Distanzstücks 4 und der Radnabe 5 einen labyrinthförmigen Spalt 28 zwischen sich bilden.

Die Radnabe 5 bildet dazu ein erstes Radnaben-Labyrinth-Element 29, welches in einer radialen Richtung r nach innen gerichtet ist, und ein zweites Radnaben-Labyrinth-Element 30, welches in der radialen Richtung r ebenfalls nach innen gerichtet ist. Das zweite Radnaben-Labyrinth-Element 30 ist von dem ersten Radnaben-Labyrinth-Element 29 in der axialen Richtung x beabstandet angeordnet, wobei das erste Radnaben-Labyrinth-Element 29 in der axialen Richtung x näher an der Radblende 2 angeordnet ist als das zweite Radnaben-Labyrinth-Element 30.

Das Distanzstück 4 bildet ein erstes Distanzstück-Labyrinth-Element 31 und ein von dem ersten Distanzstück-Labyrinth-Element 31 in der axialen Richtung x beabstandetes zweites Distanzstück-Labyrinth-Element 32. Beide Distanzstück-Labyrinth-Elemente 31, 32 sind in der radialen Richtung r nach außen gerichtet. Das erste Radnaben-Labyrinth-Element 29 ist in der axialer Richtung x zwischen dem ersten Distanzstück-Labyrinth-Element 31 und dem zweiten Distanzstück-Labyrinth-Element 32 angeordnet, ohne die beiden Distanzstück-Labyrinth-Elemente 31, 32 zu berühren. Auf ähnliche Weise ist das zweite Distanzstück-Labyrinth-Element 32 in der axialen Richtung x zwischen den beiden Radnaben-Labyrinth-Elementen 29, 30 angeordnet, ohne die beiden Radnaben-Labyrinth-Elemente 29, 30 zu berühren. Dabei überlappt das erste Radnaben-Labyrinth-Element 29 das erste Distanzstück-Labyrinth-Element 31 in der radialen Richtung r und das zweite Radnaben-Labyrinth-Element 30 überlappt das zweite Distanzstück-Labyrinth-Element 32 in der radialen Richtung r, wodurch eine labyrinthförmige Führung des Spalts 28 geschaffen wird, sodass sich etwaige Fremdkörper in dem Labyrinth verfangen und nicht bis zu dem Radlager 7 gelangen können.

Um das Radlager 7 weiter vor Fremdkörpern zu schützen, weist die Anordnung 1 nach Fig. 1 bis 3 einen optionalen Labyrinth-Dichtring 33 auf (Wellendichtring), der an der inneren Oberfläche 12 und damit an einer Innenseite der Radnaben-Öffnung 27 angeordnet ist und sich zwischen der Radnabe 5 und dem Distanzstück 4 erstreckt. In der axialen Richtung x ist der Labyrinth-Dichtring 33 unmittelbar neben dem labyrinthförmigen Spalt 28 angeordnet und verschließt den labyrinthförmigen Spalt 28 in Richtung des Radlagers 7.

Fig. 2 zeigt, dass die Anordnung 1 ferner einen Radlager-Dichtring 34 umfasst (Wellendichtring), der ebenfalls an der inneren Oberfläche 12 und damit an einer Innenseite der Radnaben-Öffnung 27 angeordnet ist und sich zwischen der Radnabe 5 und dem Radlager 7 erstreckt. Der Radlager-Dichtring 34 ist in der axialen Richtung x unmittelbar an dem Radlager 7 angeordnet und dichtet das Radlager 7 in Richtung des Distanzstücks 4 ab.

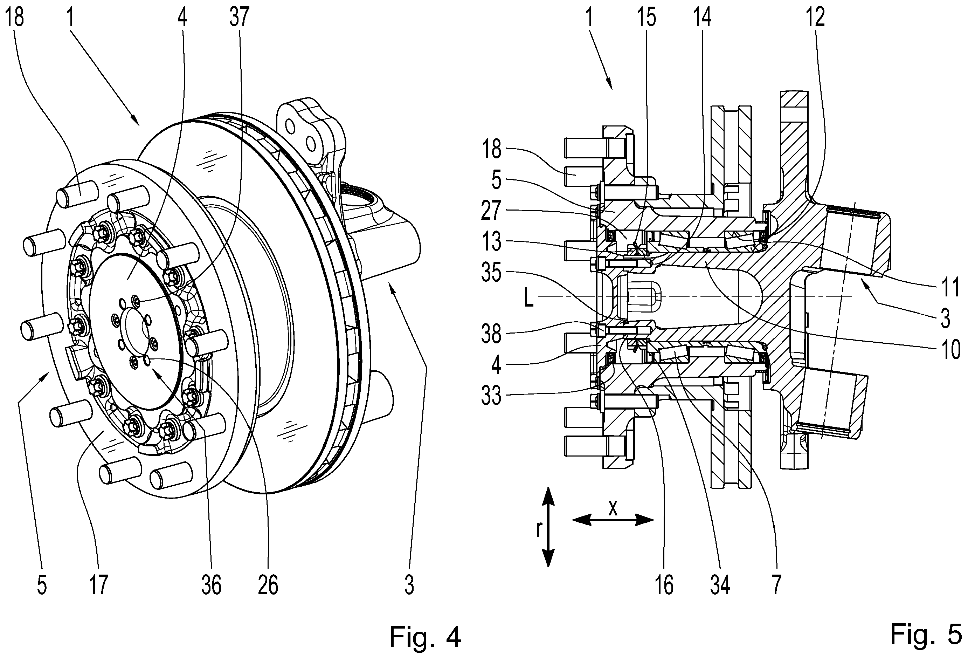

In dem durch Fig. 4 und 5 gezeigten Ausführungsbeispiel entfallen insbesondere die zentrale Bundschraube 19, die zentrale Durchgangsbohrung 21 im Achsschenkel 3 sowie die zentrale Befestigungsbohrung 22 im Distanzstück 4 gemäß Fig. 1 bis 3. Stattdessen zeichnet sich die Anordnung 1 nach Fig. 4 und 5 insbesondere dadurch aus, dass das Distanzstück 4 koaxial an einem stirnseitigen Rand 35 des Zapfens 10 des Achsschenkels 3 befestigt ist. Das Distanzstück 4 bildet dazu einen Ringabschnitt 36, der koaxial um eine Längsachse L des Distanzstücks 4 herum verläuft. Die Längsachse L des Distanzstücks 4 ist gleichzeitig auch die Längsachse des Zapfens 10, des Radlagers 7, der Radnabe 5 sowie des Rades 6.

In dem Ringabschnitt 36 des Distanzstücks 4 sind in dem gezeigten Ausführungsbeispiel vier koaxiale Radblenden-Bohrungen 26 zur koaxialen Verbindung des Distanzstücks 4 mit der Radblende 2 angeordnet. Die Radblende 2 kann durch vier Schrauben 25 (vgl. Fig. 12 und 13), die durch die koaxialen Radblenden-Bohrungen 26 geführt werden unmittelbar und drehfest an dem Distanzstück 4 befestigt werden. Weiterhin sind in dem Ringabschnitt 36 zwischen den Radblenden-Bohrungen 26 in dem gezeigten Ausführungsbeispiel vier koaxiale Achsschenkel-Bohrungen 37 zur koaxialen Verbindung des Distanzstücks 4 mit dem Zapfen 10 des Achsschenkels 3 angeordnet. Das Distanzstück 4 kann durch vier Schrauben 38, die durch die koaxialen Achsschenkel-Bohrungen 37 geführt werden, unmittelbar und drehfest an dem Zapfen 10 des Achsschenkels 3 befestigt werden. Diese Art der Befestigung leistet einen Beitrag zu einer verbesserten Dichtheit im Bereich der Radlagerverschraubung 13 bis 15, da keine Durchgangsbohrungen im Achsschenkel 3 und im Distanzstück 4 notwendig sind.

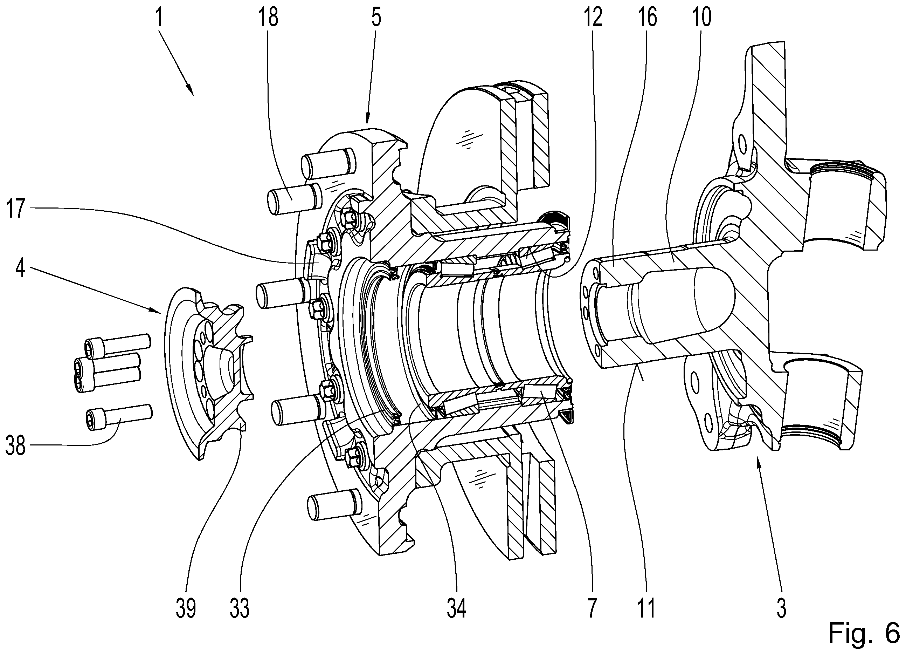

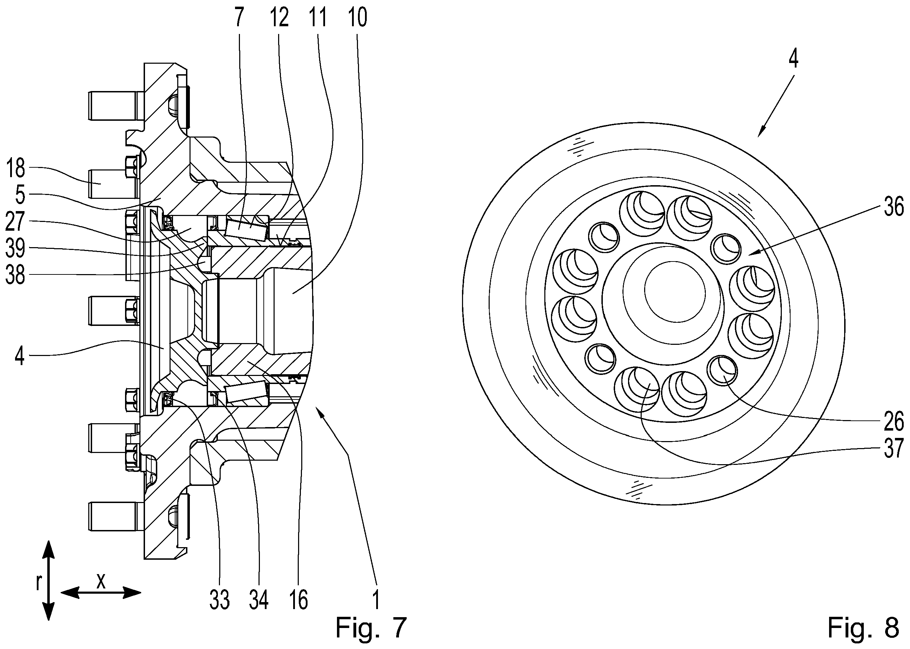

Fig. 6 bis 8 zeigen eine erfindungsgemäße Anordnung 1, gemäß welcher eine Verschraubung des Radlagers 7 bzw. eine axiale Fixierung/Verspannung des Radlagers 7 mit der Verschraubung des Distanzstücks 4 an dem Achsschenkel 3 kombiniert wird. Ein Teil des Distanzstücks 4 liegt dabei an dem Radlager 7 an, wenn das Distanzstück 4 mittels der Verschraubung an dem Zapfen 10 des Achsschenkels 3 befestigt ist, sodass das Radlager 7 in der axialen Richtung x gegen ein Verschieben gesichert ist. Dazu bildet das Distanzstück 4 ein Fixierelement 39. Das Fixierelement 39 steht in der axialen Richtung x von einer dem Radlager 7 zugewandten Stirnseite des Distanzstücks 4 ab und liegt an dem Radlager 7 an. Das Distanzstück 4 ist mittels acht Schrauben 38, die durch acht Achsschenkel-Bohrungen 37 geführt sind, mit dem Zapfen 10 des Achsschenkels 3 verschraubt. Dabei liegt das Fixierelement 39 unmittelbar an dem Radlager 7 an, sodass das Radlager 7 durch das Fixierelement 39 des Distanzstücks 4 in der axialen Richtung x fixiert wird. Der Zapfen 10 des Achsschenkels 3 ist dabei an seinem frei auslaufenden Ende passend zu dem modifizierten Distanzstück 4 mit seinem Fixierelement 39 geformt.

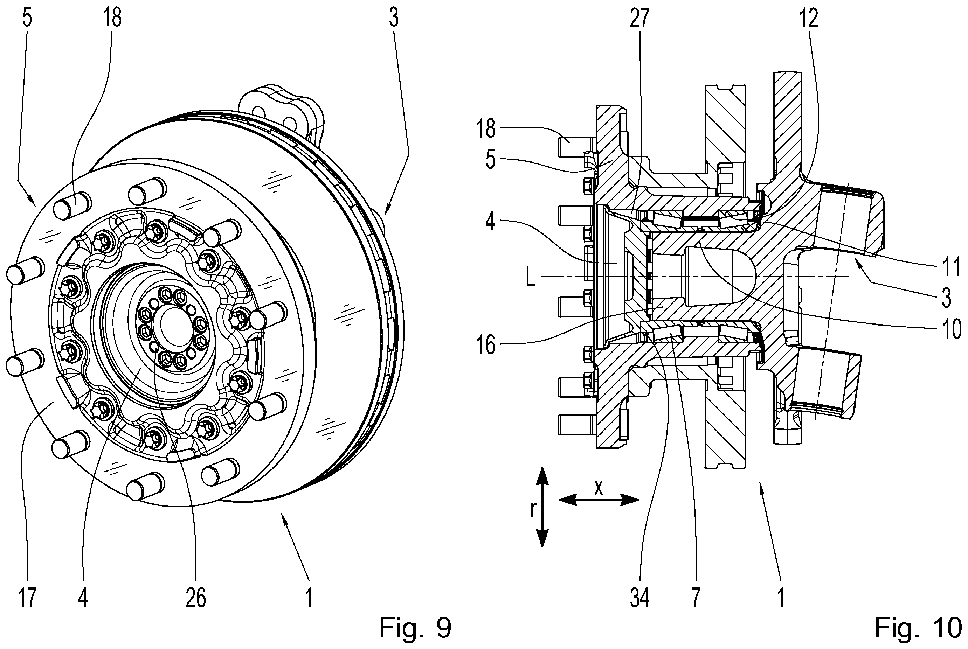

Die durch Fig. 6 bis 8 gezeigte Ausführungsform umfasst sowohl einen Labyrinth-Dichtring 33 als auch einen Radlager-Dichtring 34, wie dies vorstehend insbesondere im Zusammenhang mit den Fig. 1 bis 3 beschrieben worden ist. Die durch Fig. 9 und 10 gezeigte Ausführungsform hingegen umfasst einen Radlager-Dichtring 34, wie dies vorstehend im Zusammenhang mit den Fig. 1 bis 3 beschrieben worden ist, wohingegen auf einen zusätzlichen Labyrinth-Dichtring 33 verzichtet wird.

Fig. 11 zeigt eine an dem Distanzstück 4 angebrachte Radblende 2 sowie ein an der Radnabe 5 angebrachtes Rad 6 mit Felge 8 und Reifen 9. Fig. 12 zeigt eine Radblende 2, die einen Großteil des Rades 6 einschließlich dessen Reifens 9 verdeckt. Fig. 13 zeigt eine Radblende 2, welche lediglich die Felge 8 des Rades 6 bedeckt.

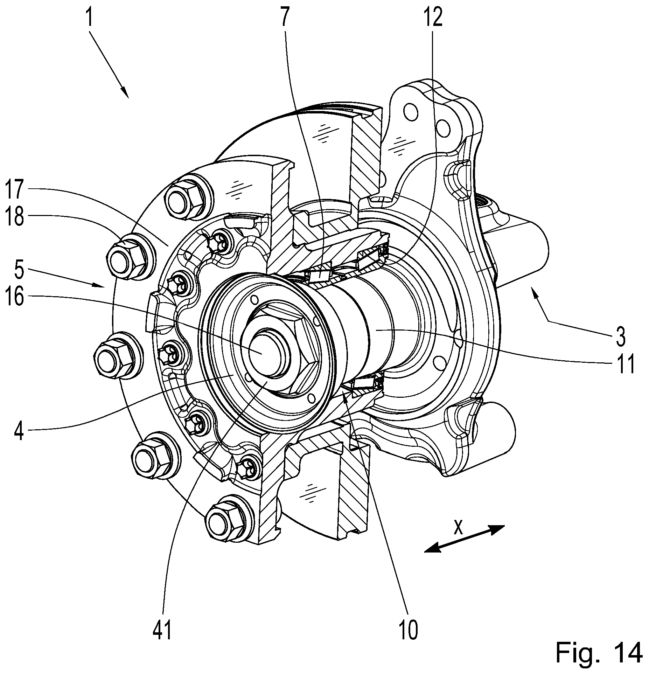

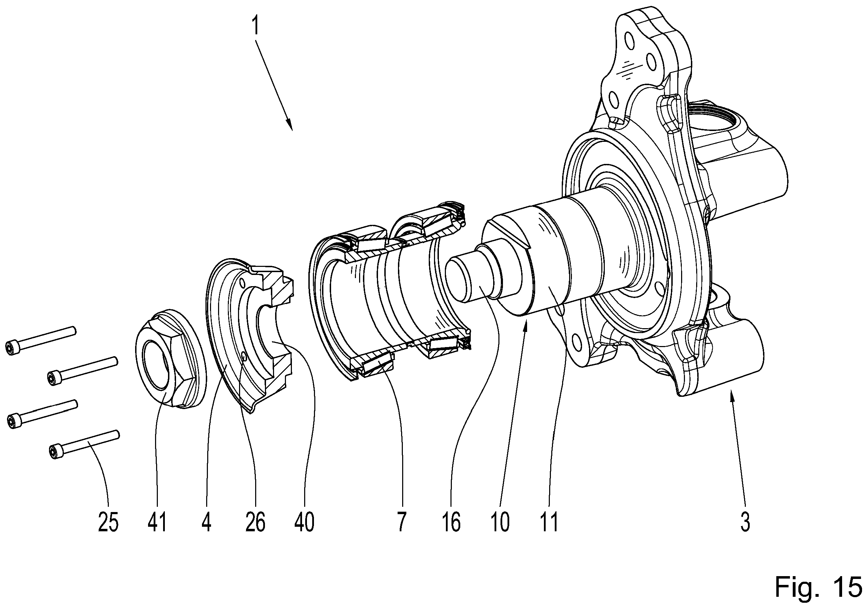

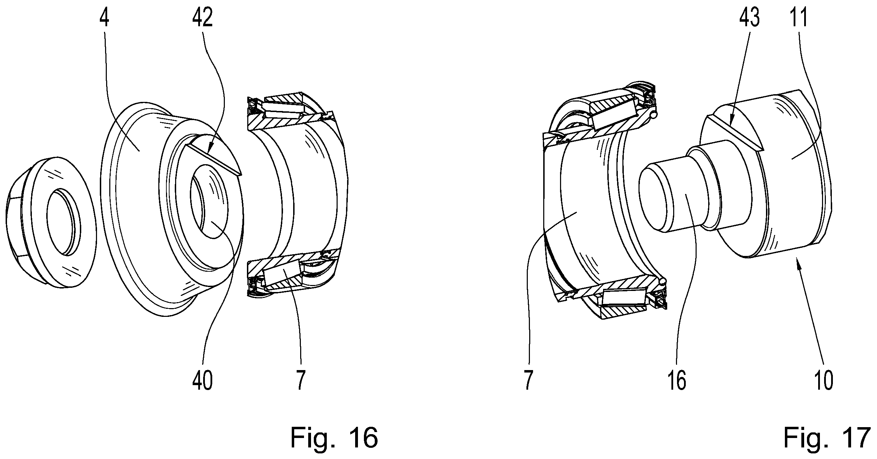

Fig. 14 bis 17 zeigen ein Ausführungsbeispiel, wonach das Distanzstück 4 eine zentrale Öffnung 40 aufweist. Ein frei auslaufendes bzw. ein distales Ende 16 des Zapfens 10 ist durch die zentrale Öffnung 40 des Distanzstücks 4 geführt und weist ein Außengewinde auf. Eine Zentralmutter 41 weist ein zu dem Außengewinde des distalen Endes 16 des Zapfens 10 passendes Innengewinde auf. Das Distanzstück 4 ist mittels der Zentralmutter 41 drehfest mit dem distalen Ende 16 des Zapfens 10 verschraubt. Zur Ausrichtung und drehfesten Sicherung des Distanzstücks 4 gegenüber dem Zapfen 10 des Achsschenkels 3 weist das Distanzstück 4 einen ersten Drehfixierbund 42 auf. Der Zapfen 10 des Achsschenkels 3 weist einen zweiten Drehfixierbund 43 aufweist, wobei der erste Drehfixierbund 42 derart formschlüssig an dem zweiten Drehfixierbund 43 anliegt, dass das Distanzstück 4 gegen Drehen gesichert ist.

### Bezugszeichen

- L: Längsachse Distanzstück
- r: radiale Richtung
- x: axiale Richtung

- 1: Anordnung
- 2: Radblende
- 3: Achsschenkel
- 4: Distanzstück
- 5: Radnabe
- 6: Rad
- 7: Radlager
- 8: Felge
- 9: Reifen
- 10: Zapfen Achsschenkel
- 11: äußere Umfangsfläche Zapfen
- 12: innere Umfangsfläche Radnabe
- 13: Nutmutter
- 14: Nutmutter
- 15: Sicherungsblech
- 16: distales Ende Zapfen
- 17: äußere Stirnseite Radnabe
- 18: Schraube
- 19: zentrale Bundschraube
- 20: Hohlraum Zapfen
- 21: Durchgangsbohrung Achsschenkel
- 22: zentrale Befestigungsbohrung Distanzstück
- 23: Fixierbund
- 24: Zentrierdurchmesser
- 25: Schraube
- 26: koaxiale Bohrung
- 27: zentrale Radnaben-Öffnung
- 28: labyrinthförmiger Spalt
- 29: erstes Radnaben-Labyrinth-Element
- 30: zweites Radnaben-Labyrinth-Element
- 31: erstes Distanzstück-Labyrinth-Element
- 32: zweites Distanzstück-Labyrinth-Element
- 33: Labyrinth-Dichtring
- 34: Radlager-Dichtring
- 35: stirnseitiger Rand Zapfen
- 36: Ringabschnitt Distanzstück
- 37: Achsschenkel-Bohrung
- 38: Schraube
- 39: Fixierelement
- 40: zentrale Öffnung Distanzstück
- 41: Zentralmutter
- 42: erster Drehfixierbund
- 43: zweiter Drehfixierbund

## Patentansprüche

1. Anordnung (1) einer nicht rotierenden Radblende (2) an einem Achsschenkel (3) für ein Kraftfahrzeug, die Anordnung (1) umfassend
- einen Achsschenkel (3),
- ein Distanzstück (4),
- eine Radnabe (5),
- ein Radlager (7),
- ein Rad (6) und
- eine nicht rotierende Radblende (2),
wobei
- der Achsschenkel (3) einen nicht rotierenden Zapfen (10) umfasst,
- der Zapfen (10) eine äußere Umfangsfläche (11) aufweist, auf welcher die Radnabe (5) mittels des Radlagers (7) drehbar gelagert ist,
- die Radnabe (5) eine äußere Stirnseite (17) aufweist, an welcher das Rad (6) drehfest befestigt ist,
- das Distanzstück (4) derart an dem Achsschenkel (3) befestigt ist, dass das Distanzstück (4) nicht rotiert, wenn die Radnabe (5) rotiert,
- das Distanzstück (4) durch eine zentrale Radnaben-Öffnung (27) der Radnabe (5) geführt ist, wobei die zentrale Radnaben-Öffnung (27) zu dem Radlager (7) führt,
- die Radblende (2) unmittelbar und drehfest an dem Distanzstück (4) befestigt ist, sodass die Radblende (2) nicht rotiert, wenn die Radnabe (5) rotiert,
- die Radblende (2) zumindest einen Teil einer Außenseite des Rades (6) verdeckt,
- das Distanzstück (4) ein Fixierelement (39) bildet, das sich in einer axialen Richtung (x) erstreckt und an dem Radlager (7) anliegt, und
- das Distanzstück (4) an dem Zapfen (10) des Achsschenkels (3) befestigt ist, sodass das Fixierelement (39) des Distanzstücks (4) das Radlager (7) in der axialen Richtung (x) fixiert, **dadurch gekennzeichnet, dass** das Distanzstück (4) die zentrale Öffnung (27) der Radnabe (5) nach außen verschließt, ohne in Kontakt mit der Radnabe (5) zu kommen.

2. Anordnung (1) nach Anspruch 1, wobei dort, wo das Distanzstück (4) die zentrale Öffnung (27) der Radnabe (5) nach außen verschließt, einander zugewandte Abschnitte (29, 30; 31, 32) des Distanzstücks (4) und der Radnabe (5) einen labyrinthförmigen Spalt (28) zwischen sich bilden.

3. Anordnung (1) nach Anspruch 2, wobei
- die Radnabe (5) wenigstens ein Radnaben-Labyrinth-Element (29) bildet, welches in einer radialen Richtung (r) nach innen gerichtet ist,
- das Distanzstück (4) wenigstens ein Distanzstück-Labyrinth-Element (31) bildet, welches in der radialen Richtung (r) nach außen gerichtet ist,
- das Radnaben-Labyrinth-Element (29) in einer axialer Richtung (x) neben dem Distanzstück-Labyrinth-Element (31) angeordnet ist, ohne das Distanzstück-Labyrinth-Element (31) zu berühren, und
- das Radnaben-Labyrinth-Element (29) das Distanzstück-Labyrinth-Element (31) in der radialen Richtung (r) überlappt.

4. Anordnung (1) nach Anspruch 2 oder 3, die Anordnung (1) weiterhin umfassend einen Labyrinth-Dichtring (33), wobei der Labyrinth-Dichtring (33)
- an einer Innenseite (12) der Radnaben-Öffnung (27) angeordnet ist und sich zwischen der Radnabe (5) und dem Distanzstück (4) erstreckt, und
- in der axialen Richtung (x) unmittelbar neben dem labyrinthförmigen Spalt (28) angeordnet ist.

5. Anordnung (1) nach einem der vorstehenden Ansprüche, wobei das Distanzstück (4) koaxial an einem stirnseitigen Rand (35) des Zapfens (10) des Achsschenkels (3) befestigt ist.

6. Anordnung (1) nach Anspruch5, wobei
- das Distanzstück (4) einen Ringabschnitt (36) bildet, der um eine Längsachse (L) des Distanzstücks (4) herum verläuft,
- mehrere Radblenden-Bohrungen (26) zur Verbindung mit der Radblende (2) in dem Ringabschnitt (36) angeordnet sind, und
- mehrere Achsschenkel-Bohrungen (37) zur Verbindung mit dem Zapfen (10) des Achsschenkels (3) in dem Ringabschnitt (36) zwischen den Radblenden-Bohrungen (26) angeordnet sind.

7. Anordnung nach einem der Ansprüche 1 bis 6, wobei das Distanzstück (4) mittels mehrerer Schrauben (38) an dem Zapfen (10) des Achsschenkels (3) befestigt ist.

8. Anordnung (1) nach einem der Ansprüche 1 bis 6, wobei
- ein distales Ende (16) des Zapfens (10) durch eine zentrale Öffnung (40) des Distanzstücks (4) geführt ist, und
- das Distanzstück (4) mittels einer Zentralmutter (41) drehfest an dem distalen Ende (16) des Zapfens (10) befestigt ist.

9. Anordnung (1) nach einem der vorstehenden Ansprüche, die Anordnung (1) weiterhin umfassend einen Radlager-Dichtring (34), wobei der Radlager-Dichtring (34)
- an einer Innenseite (12) der Radnaben-Öffnung (27) angeordnet ist,
- sich zwischen der Radnabe (5) und dem Radlager (7) erstreckt, und
- in einer axialen Richtung (x) unmittelbar an dem Radlager (7) angeordnet ist.

## Claims

1. Arrangement (1) of a non-rotating hub cap (2) on an axle stub (3) for a motor vehicle, the arrangement (1) comprising
- an axle stub (3),
- a spacer (4),
- a wheel hub (5),
- a wheel bearing (7),
- a wheel (6), and
- a non-rotating hub cap (2),
wherein
- the axle stub (3) comprises a non-rotating journal (10),
- the journal (10) has an outer circumferential surface (11) on which the wheel hub (5) is mounted rotatably by means of the wheel bearing (7),
- the wheel hub (5) has an outer end face (17) to which the wheel (6) is fastened rotationally conjointly,
- the spacer (4) is fastened to the axle stub (3) in such a way that the spacer (4) does not rotate when the wheel hub (5) rotates,
- the spacer (4) is guided through a central wheel-hub opening (27) of the wheel hub (5), wherein the central wheel-hub opening (27) leads to the wheel bearing (7),
- the hub cap (2) is fastened directly and rotationally jointly to the spacer (4), so that the hub cap (2) does not rotate when the wheel hub (5) rotates,
- the hub cap (2) conceals at least a part of an outer side of the wheel (6),
- the spacer (4) forms a fixing element (39) which extends in an axial direction (x) and which bears against the wheel bearing (7), and
- the spacer (4) is fastened to the journal (10) of the axle stub (3) so that the fixing element (39) of the spacer (4) fixes the wheel bearing (7) in the axial direction (x), **characterized in that** the spacer (4) closes off the central opening (27) of the wheel hub (5) towards the outside without coming into contact with the wheel hub (5).

2. Arrangement (1) according to Claim 1, wherein portions (29, 30; 31, 32) of the spacer (4) and the wheel hub (5) that are directed towards one another form a labyrinthine gap (28) between them where the spacer (4) closes off the central opening (27) of the wheel hub (5) towards the outside.

3. Arrangement (1) according to Claim 2, wherein
- the wheel hub (5) forms at least one wheel-hub labyrinth element (29) which is directed inwards in a radial direction (r),
- the spacer (4) forms at least one spacer labyrinth element (31) which is directed outwards in the radial direction (r),
- the wheel-hub labyrinth element (29) is arranged next to the spacer labyrinth element (31) in an axial direction (x) without being in contact with the spacer labyrinth element (31), and
- the wheel-hub labyrinth element (29) overlaps the spacer labyrinth element (31) in the radial direction (r).

4. Arrangement (1) according to Claim 2 or 3, the arrangement (1) further comprising a labyrinth sealing ring (33), wherein the labyrinth sealing ring (33)
- is arranged on an inner side (12) of the wheel-hub opening (27) and extends between the wheel hub (5) and the spacer (4), and
- is arranged directly next to the labyrinthine gap (28) in the axial direction (x).

5. Arrangement (1) according to one of the preceding claims, wherein the spacer (4) is fastened coaxially to an end edge (35) of the journal (10) of the axle stub (3).

6. Arrangement (1) according to Claim 5, wherein
- the spacer (4) forms an annular portion (36) which extends around a longitudinal axis (L) of the spacer (4),
- multiple hub-cap bores (26) for connection to the hub cap (2) are arranged in the annular portion (36), and
- multiple axle-stub bores (37) for connection to the journal (10) of the axle stub (3) are arranged in the annular portion (36) between the hub-cap bores (26).

7. Arrangement according to one of Claims 1 to 6, wherein the spacer (4) is fastened to the journal (10) of the axle stub (3) by means of multiple screws (38).

8. Arrangement (1) according to one of Claims 1 to 6, wherein
- a distal end (16) of the journal (10) is guided through a central opening (40) of the spacer (4), and
- the spacer (4) is fastened rotationally conjointly to the distal end (16) of the journal (10) by means of a central nut (41).

9. Arrangement (1) according to one of the preceding claims, the arrangement (1) further comprising a wheel-bearing sealing ring (34), wherein the wheel-bearing sealing ring (34)
- is arranged on an inner side (12) of the wheel-hub opening (27),
- extends between the wheel hub (5) and the wheel bearing (7), and
- is arranged directly on the wheel bearing (7) in an axial direction (x).

## Revendications

1. Agencement (1) d'un enjoliveur non rotatif (2) sur un pivot de fusée de direction (3) pour véhicule automobile, l'agencement (1) comprenant
- un pivot de fusée (3),
- une entretoise (4),
- un moyeu de roue (5),
- un palier de roue (7),
- une roue (6) et
- un enjoliveur (2) non rotatif,
où
- le pivot de fusée (3) comprend un tenon non rotatif (10),
- le tenon (10) présente une surface circonférentielle extérieure (11) sur laquelle le moyeu de roue (5) est monté de manière rotative au moyen du palier de roue (7),
- le moyeu de roue (5) présente un côté d'extrémité extérieur (17) auquel est fixée de manière solidaire en rotation la roue (6),
- l'entretoise (4) est fixée au pivot de fusée (3) de sorte que l'entretoise (4) ne tourne pas lorsque le moyeu de roue (5) tourne,
- l'entretoise (4) est guidée à travers une ouverture de moyeu de roue centrale (27) du moyeu de roue (5), l'ouverture de moyeu de roue centrale (27) menant au palier de roue (7),
- l'enjoliveur (2) est fixé immédiatement et de manière solidaire en rotation sur l'entretoise (4) de sorte que l'enjoliveur (2) ne tourne pas lorsque le moyeu de roue (5) tourne,
- l'enjoliveur (2) couvre au moins une partie du côté extérieur de la roue (6),
- l'entretoise (4) forme un élément de fixation (39) s'étendant selon une direction axiale (x) et étant contre le palier de roue (7), et
- l'entretoise (4) est fixée au tenon (10) du pivot de fusée (3) de manière à ce que l'élément de fixation (39) de l'entretoise (4) fixe le palier de roue (7) dans la direction axiale (x), **caractérisé en ce que** l'entretoise (4) ferme l'ouverture centrale (27) du moyeu de roue (5) vers l'extérieur sans venir en contact avec le moyeu de roue (5).

2. Agencement (1) selon la revendication 1, dans lequel où l'entretoise (4) ferme l'ouverture centrale (27) du moyeu de roue (5) vers l'extérieur, des sections (29, 30 ; 31, 32) de l'entretoise (4) et du moyeu de roue (5) se faisant face l'une à l'autre forment entre elles une fente (28) en forme de labyrinthe.

3. Agencement (1) selon la revendication 2, dans lequel
- le moyeu de roue (5) forme au moins un élément de labyrinthe de moyeu de roue (29) dirigé vers l'intérieur selon une direction radiale (r),
- l'entretoise (4) forme au moins un élément de labyrinthe d'entretoise (31) dirigé vers l'extérieur selon la direction radiale (r),
- l'élément de labyrinthe (29) de moyeu de roue est disposé selon une direction axiale (x) à côté de l'élément de labyrinthe d'entretoise (31) sans toucher l'élément de labyrinthe d'entretoise (31) et
- l'élément de labyrinthe de moyeu de roue (29) chevauche l'élément de labyrinthe d'entretoise (31) selon la direction radiale (r).

4. Agencement (1) selon la revendication 2 ou 3, l'agencement (1) comprenant en outre une bague d'étanchéité à labyrinthe (33), dans lequel la bague d'étanchéité à labyrinthe (33)
- est située sur un côté intérieur (12) de l'ouverture de moyeu de roue (27) et s'étendant entre le moyeu de roue (5) et l'entretoise (4), et
- est disposés dans la direction axiale (x) immédiatement à côté de la fente en forme de labyrinthe (28).

5. Agencement (1) selon l'une quelconque des revendications précédentes, dans lequel l'entretoise (4) est fixée coaxialement à un bord avant (35) du tenon (10) du pivot de fusée (3).

6. Agencement (1) selon la revendication 5, dans lequel
- l'entretoise (4) forme une section annulaire (36) s'étendant autour d'un axe longitudinal (1) de l'entretoise (4),
- plusieurs alésages d'enjoliveur (26) sont disposés dans la section annulaire (36) pour être reliés à l'enjoliveur (2), et
- plusieurs alésages de pivot de fusée (37) sont disposés dans la section annulaire (36) entre les alésages d'enjoliveur (26) pour être reliés au tenon (10) du pivot de fusée (3).

7. Agencement selon l'une quelconque des revendications 1 à 6, dans lequel l'entretoise (4) est fixée au moyen d'une pluralité de vis (38) sur le tenon (10) du pivot de fusée (3).

8. Agencement (1) selon au moins l'une des revendications 1 à 6,
- une extrémité distale (16) du tenon (10) traversant une ouverture centrale (40) de l'entretoise (4), et
- l'entretoise (4) étant fixée de manière solidaire en rotation à l'extrémité distale (16) du tenon (10) au moyen d'un écrou central (41).

9. Agencement (1) selon l'une des revendications précédentes, l'agencement (1) comprenant en outre une bague d'étanchéité de palier de roue (34), la bague d'étanchéité de palier de roue (34)
- étant situé sur un côté intérieur (12) de l'ouverture de moyeu de roue (27),
- s'étendant entre le moyeu de roue (5) et le palier de roue (7), et
- étant située selon une direction axiale (x) directement sur le palier de roue (7).
